# EUROPEAN PATENT APPLICATION

(11) **EP 4 435 814 A1**
(43) Date of publication of application: **25.09.2024**
(21) Application number: 22892937.8
(22) Date of filing: 15.11.2022
(51) Int. Cl.: H01G 13/00, H01G 2/02, H01G 4/228, H01G 4/38

(54) **ELECTRONIC COMPONENT MOUNTING MODULE HAVING BUS BAR STACK, AND METHOD FOR MANUFACTURING SAME**

(30) Priority: 15.11.2021 JP 2021185448
(71) Applicant: Nippon Chemi-Con Corporation, Tokyo 141-8605 (JP)
(72) Inventor: IDEUE Takashi, Tokyo 141-8605 (JP); KUROSU Mitsuru, Tokyo 141-8605 (JP)
(74) Representative: Baldus, Oliver
(86) International application number: PCT/JP2022/042458
(87) International publication number: WO 2023/085439

(57) **Abstract**

Provided are a surface mounting type electronic component mounting module using a bus bar, wherein the heights of solder mounting surfaces of a laminated bus bar of an anode and a laminated bus bar of a cathode are aligned to enable the use of reflow solder, and a more space-saving and miniaturized electronic component mounting module without lowering electrical characteristics. An electronic component mounting module is provided with a bus bar laminate in which a first bus bar and a second bus bar, each of which is provided with a region for soldering an external terminal of an electronic component, are laminated in an insulated manner, wherein the first bus bar is provided with an opening, the second bus bar is provided with a convex body projecting toward the first bus bar side and including a region for soldering, the convex body of the second bus bar is arranged at a position corresponding to the opening, the region for soldering the first bus bar and the region for soldering the convex body are set to have the same height as to such an extent that an external terminal of the electronic component by reflow soldering can be soldered, a plurality of electronic components to which the external terminals are soldered are provided on the first bus bar side, and the plurality of electronic components are connected to one convex body by external terminals of the same polarity.

## Description

### [Technical Field]

The present invention relates to a surface mounting type electronic component mounting module using a bus bar, in which the heights of solder mounting surfaces of a laminated bus bar of an anode and a laminated bus bar of a cathode are aligned to enable the use of reflow solder.

### Background

It is known that, in a module mounting a plurality of electronic components, by using a metal plate (bus bar) as a conductive material to which a large current is applied, resistance is reduced, heat generation is reduced, and heat radiation performance is improved. When a large current is used, heat cannot be dissipated quickly enough in a so-called printed wiring board or the like, which is widely used for mounting a small electronic device, and heat is accumulated, and thus there is a concern that the electronic component or the like may be thermally damaged.

For this reason, for example, when a plurality of capacitors are mounted, the heat dissipation property is improved by laminating (bonding) the bus bars of the positive electrode and the bus bars of the negative electrode with an insulating layer (for example, an insulating sheet or a coating layer of an insulating material) therebetween, and mounting a plurality of the capacitors side by side on one surface of the bonded bus bars.

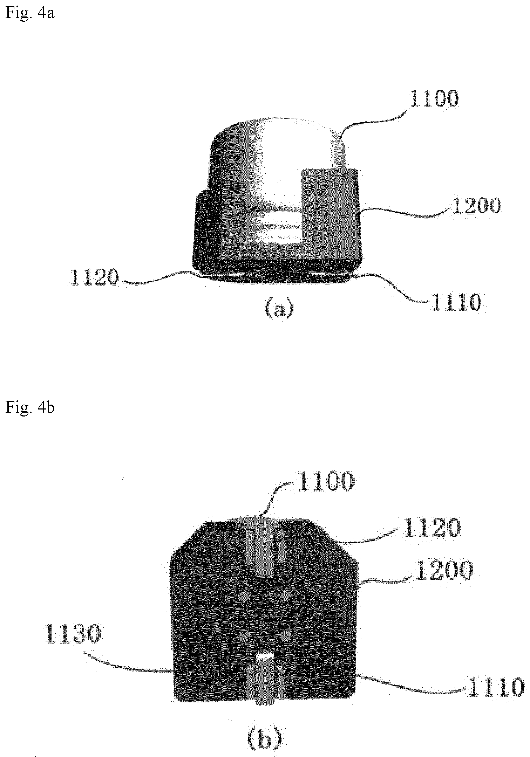

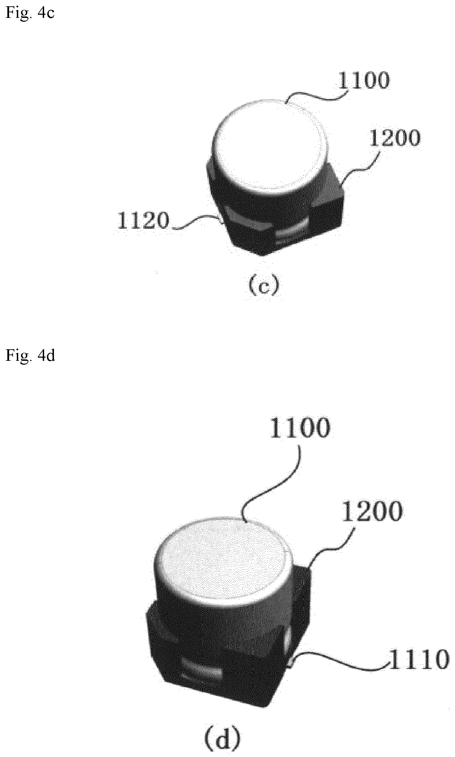

In FIG. 4 and the description thereof of the following patent document 1, it is described that "in the capacitor module 31 of the second embodiment shown in FIG. 4, the substrate 32 has a structure in which the first and second metal plates 34 and 35 and are bonded to both surfaces of the insulating sheet 33. FIG. 6 is a plan view of the insulating sheet 33. The insulating sheet 33 is made of silicone resin and has a thickness of about 0.1 to 0.05 mm. The insulating sheet 33 may be formed of another synthetic resin such as an epoxy resin (resist).

That is, Patent Document 1 discloses a structure in which a first metal plate 34 and a second metal plate 35 are bonded together with an insulating sheet 33 interposed therebetween, lead terminals 3a and 3b of a multilayer capacitor 3 are vertically formed through the metal plate, and the lead terminals 3a and 3b are soldered to the metal plate 34,35.

As shown in FIG. 4 of the patent document 1, the lead terminal 3a is soldered to the bottom surface of the upper metal plate 34 by the solder 16, and the lead terminal 3b is soldered to the bottom surface of the lower metal plate 35 by the solder 17. Therefore, in such a structure, the heights of the pair of lead terminals 3a and 3b to be soldered are different from each other by the height corresponding to the thickness of the insulating sheet 33 and the metal plate 35 on the lower side. In this case, although no problem occurs in the case where the soldering is individually performed by manual operation, the soldering cannot be performed in the case where a mass-production process is considered in anticipation of a certain degree of throughput by using flow solder or the like.

### [Prior Art Documents]

### Patent Documents

Japanese Laid-Open Patent Publication No. 2001-178151

### Summary of the Invention

### [Problems to be solved by the invention]

Conventionally, when a plurality of surface mounting type or lead insertion type electronic components are mounted on two laminated bus bars, since the heights of the mounting surfaces of the positive and negative bus bars (that is, the heights of the soldering points of the positive and negative lead terminals to the respective bus bars) are different, reflow soldering or the like cannot be used, and there is a problem that the mounting operation of the electronic components becomes complicated.

That is, in the case where the soldering heights of the pair of lead terminals are different from each other as in the prior art, there is no problem if the soldering operation is performed manually. Each busbar has a certain thickness in consideration of heat dissipation and the like as the current is larger, but the difference in height of the soldering point corresponding to the thickness of the busbar electrode body cannot be ignored in the reflow soldering process.

Therefore, there is a demand for a structure in which each lead terminal (surface mounting type) of an electronic component mounting module using a cathode bus bar and an anode bus bar bonded together can be soldered to each bus bar by utilizing reflow solder with higher mass production efficiency. The present invention has been made in view of the above problems, and an object thereof is to provide a surface mounting type electronic component mounting module using a bus bar, in which the heights of solder mounting surfaces of a laminated bus bar of an anode and a laminated bus bar of a cathode are aligned, and reflow solder can be used. It is another object of the present invention to provide an electronic component mounting module which is reduced in size and space without degrading electrical characteristics.
The present invention provides a method for solving the above-mentioned problems.

An electronic component mounting module of an electronic component is an electronic component mounting module comprising a bus bar laminate in which a first bus bar and a second bus bar, each of which is provided with a region for soldering an external terminal, are laminated in an insulated manner, wherein the first bus bar is provided with an opening, the second bus bar is provided with a convex body projecting to the first bus bar side and including a region for soldering, the convex body of the second bus bar is arranged at a position corresponding to the opening, the region for soldering the first bus bar and the region for soldering the convex body have the same height as to such an extent that the external terminal of the electronic component can be soldered by reflow soldering, a plurality of electronic components to which the external terminal is soldered are provided on the first bus bar side, and the plurality of electronic components are each connected to an external terminal of the same polarity with respect to one convex body.

The electronic component mounting module of the present invention is preferably characterized in that, in the relationship between each electronic component mounted on the electronic component mounting module and all other electronic components disposed adjacent to the periphery of each electronic component, the polarities of the external terminals that are in close proximity to each other are the same.

The electronic component mounting module of the electronic component of the present invention is further preferably characterized in that at least the tip of the external terminal is disposed in the top of the head of the convex body.

A method for manufacturing an electronic component mounting module is characterized by comprising a step of forming an opening in a first bus bar and a step of forming a convex body in a second bus bar, the convex body projecting toward the first bus bar and including a region to be soldered, and then arranging the convex body of the second bus bar at a position corresponding to the opening and laminating the first bus bar and the second bus bar in an insulating manner, and a step of soldering the external terminals of a plurality of electronic components on the first bus bar side, wherein the region to be soldered of the first bus bar and the region to be soldered of the convex body are at the same height as to such an extent that the external terminals of the electronic components can be soldered by reflow soldering, and the external terminals of the plurality of electronic components are connected to one convex body with the same polarity.

The method of manufacturing an electronic component mounting module of an electronic component of the present invention is preferably characterized in that, in the relationship between each electronic component mounted on the electronic component mounting module and all other electronic components disposed adjacent to the periphery of each electronic component, the polarities of the external terminals that are in close proximity to each other are the same.

The method of manufacturing an electronic component mounting module of an electronic component of the present invention is more preferably characterized in that at least the tip of the external terminal is disposed in the top of the head of the convex body.

The electronic component mounting module of the present invention is further preferably characterized in that the electronic component is a capacitor.

The method of manufacturing an electronic component mounting module of an electronic component of the present invention is more preferably characterized in that the electronic component is a capacitor.

### Effect of the Invention

A surface mounting type electronic component mounting module using a bus bar, wherein the height of the solder mounting surface of the laminated bus bar of the anode and the bus bar of the cathode are aligned to enable the use of reflow solder, and the like can be provided. Furthermore, it is possible to provide an electronic component mounting module that is more space-saving and miniaturized without degrading the electrical characteristics.

### Brief description of the drawings

FIG. 1 is a perspective view illustrating the overall outline of an electronic component packaging module.
FIG. 2a is an explanatory diagram in which a part of the capacitor is removed to show the connection relationship between the bus bar laminated structure and the capacitor.
FIG. 2b is an enlarged cross-sectional view illustrating a configuration of the capacitor when cut at the center thereof.
FIG. 3 is a diagram illustrating an outline of the overall structure of the bus bar laminate of the present embodiment.
FIG. 4a illustrates a capacitor configured as a surface mount type.
FIG. 4b illustrates a capacitor configured as a surface mount type.
FIG. 4c illustrates a capacitor configured as a surface mount type.
FIG. 4d illustrates a capacitor configured as a surface mount type.
FIG. 5 is a diagram illustrating a typical example of a capacitor mounting module molded with resin, shown by a broken line.

### DESCRIPTION OF THE PREFERRED EMBODIMENTS

The bus bar laminate exemplified in the present embodiment can be used for an in-vehicle application or the like by surface mounting a plurality of electronic components such as capacitors using a large current in a plane by reflow soldering. Conventionally, in a bus bar laminated body, since each of an upper layer side bus bar and a lower layer side bus bar has a considerable thickness, a difference corresponding to the thickness is generated in the height direction at a soldering point of each bus bar to which a lead terminal of an electronic component to be mounted is soldered. The electronic component may be preferably a power storage device, more preferably a capacitor, but may be other electronic components.

In addition, the technical trend of the electronic component mounting module is that the electronic components mounted on the chip are further advanced with the progress of miniaturization and weight reduction. If the electronic components to be mounted include both chip components and lead terminal components, the soldering for electrically and mechanically connecting and fixing them is two steps, which increases the number of steps and increases the cost.

According to the structure proposed in the embodiment, the step of solder quality confirmation, which is an essential step after reflow soldering, becomes easy, and the solder fillet can be confirmed by image processing or visual observation, whereby the quality of soldering can be evaluated and confirmed. The height of the solder to be soldered by reflow soldering is preferably 0.6 mm or less, and more preferably 0.3 mm or less.

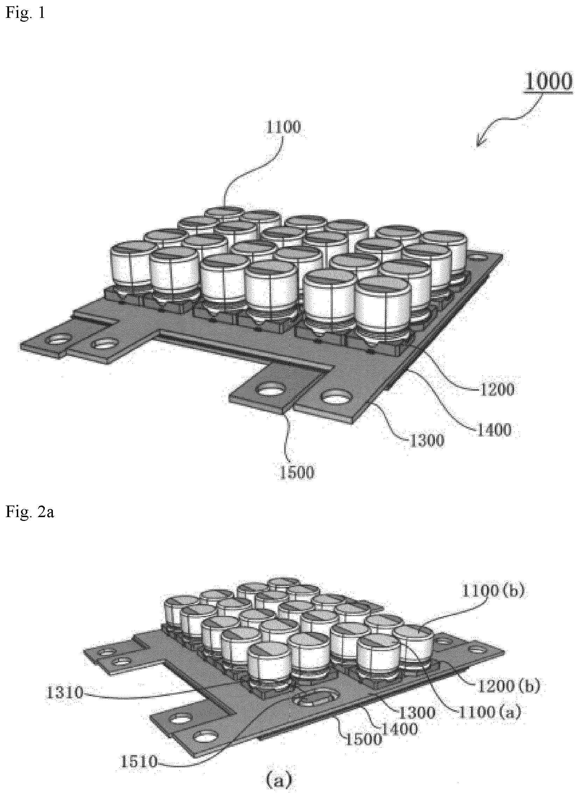

FIG. 1 is a perspective view for explaining the overall outline of the electronic component mounting module 1000. As shown in FIG. 1, the electronic component mounting module 1000 includes a first bus bar 1300, an insulating sheet 1400, and a second bus bar 1500, and a plurality of capacitors 1100 mounted on a pedestal 1200 are surface mounted on the first bus bar 1300. Although not shown in FIG. 1, a heat sink may be surface mounted (surface contact) on the outer surface side of the second bus bar 1500.

As shown in FIG. 1, since the bus bar laminated body can supply a large current with low resistance and is excellent in heat dissipation characteristics, even if a large number of electronic components such as capacitors 1100 are mounted at high density, the electronic components can be prevented from being thermally damaged. In particular, although it is known that the capacitor 1100 is weak against high heat, the bus-bar laminate of the present invention can maintain the characteristics of high reliability and high durability. Each bus bar 1300,1500 is made of a metal having a certain thickness in consideration of a large current and heat dissipation, and thus, a considerably strong characteristic can be obtained. Therefore, even a capacitor whose life is greatly affected by heat can be integrated without any problem.

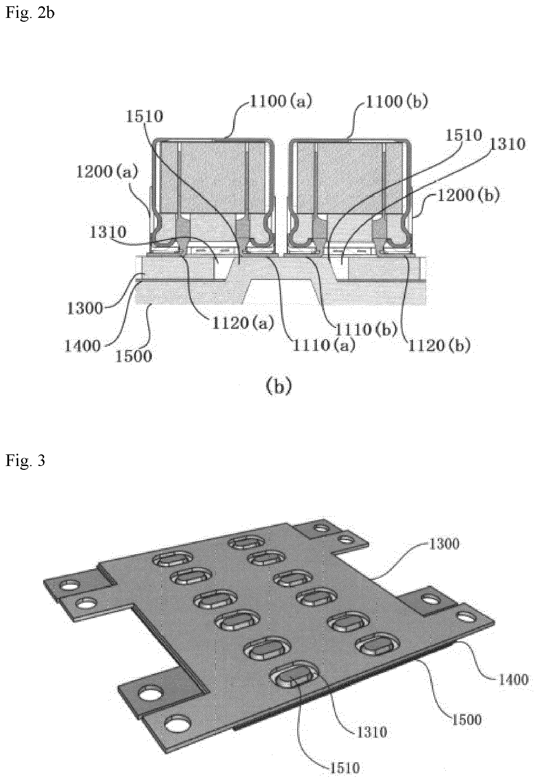

FIG. 2a is an explanatory view in which a part of the capacitor is removed in order to show the connection relationship between the bus bar laminated structure and the capacitor 1100, and FIG. 2b is an enlarged sectional view for explaining the configuration when the capacitor 1100 is cut at the center. Although not shown in FIG. 2a, a heat conductive film and a heat sink may be attached to the outer surface side of the second bus bar 1500 on the same plane, whereby the heat of the second bus bar 1500 can be efficiently radiated to the outside. Since there are no projections of other terminals or projections such as solder fillets on the outer surface side of the second bus bar 1500, the heat conductive film and the heat sink can be attached to the second bus bar in a large area contact manner, thereby improving the heat dissipation characteristic. For example, the heat conductive film may be omitted and only the heat sink may be directly provided.

As shown in FIGS. 2a and 2b, the first electrode solder projections 1510 of the second bus bar 1500 are disposed in the projection openings 1310 of the first bus bar 1300, and are at substantially the same height as the outer surface of the first bus bar 1300 to enable reflow soldering.

The first lead terminal 1110 (a) and the second lead terminal 1120 (a) of the first capacitor 1100 (a) are inserted through the pedestal 1200 (a) and bent at the bottom surface thereof, and the pedestal 1200 (a) is set in the first capacitor 1100 (a), whereby the capacitor is handled as a surface mount type electronic component. As can be understood from FIG. 2, the first lead terminal 1110 (a) is reflow soldered to the flat top of the first electrode solder projection 1510. Here, it is assumed that at least the tip end portion of the first lead terminal 1110 (a) is accommodated without protruding from the flat top portion of the first electrode soldering convex body 1510 in a state where the tip end portion slightly protrudes from the end portion of the pedestal 1200 (a).

Similarly, the first lead terminal 1200 (b) and the second lead terminal 1120 (b) of the second capacitor 1100 (b) corresponding to the first capacitor 1100 (a) are inserted through the pedestal 1200 (b) and bent at the bottom surface thereof, and can be handled as a surface mount type electronic component by setting the pedestal 1110 (b) to the second capacitor 1100 (b). As can be understood from FIGS. 2a and 2b, the first lead terminal 1110 (b) is reflow soldered to the flat top of the first electrode solder projection 1510, which is the same as the first capacitor 1100 (a). Here, it is assumed that at least the tip end portion of the first lead terminal 1110 (b) is accommodated without protruding from the flat top portion of the first electrode soldering convex body 1510 in a state where the tip end portion slightly protrudes from the end portion of the pedestal 1200 (b).

Thus, when observed from above, the tip portions of the first lead terminal 1110 (a) and the first lead terminal 1110 (b) (hereinafter referred to collectively as the first lead terminal 1110 as appropriate), which are disposed so as to be close to and opposite to each other, can be visually recognized (visually recognized or camera image acquisition and processing thereof), and thus the quality of the reflow solder can be confirmed by observing the state of the solder fillet formed around the tip portions. The tip ends of the second lead terminals 1120 (a) and 1120 (b) (hereinafter referred to as "second lead terminals 1120") are reflow soldered to the first bus bar 1300 in a state where they slightly project from the end portions of the pedestal 1200 (a) and the pedestal 1200 (b), respectively.

With such a configuration, the heights of the top of the first electrode solder convex body 1510 and the plane of the peripheral edge of the convex body opening 1310 of the first bus bar 1300 can be aligned, and the use of reflow solder is facilitated.

FIG. 3 is a view for explaining an outline of the overall structure of the bus bar laminated body of the present embodiment. In FIG. 3, the bus bar laminate includes a first bus bar 1300 shown on the upper layer side of the drawing, a second bus bar 1500 shown on the lower layer side, and an insulating sheet 1400 disposed between the first bus bar 1300 and the second bus bar 1500. In the second bus bar 1500, the first lead terminal of the electronic component to be surface-mounted is reflow soldered to the top of the flat top portion of the first electrode solder projection 1510 projecting toward the first bus bar 1300. The first electrode solder projections 1510 are arranged in the first bus bar 1300 at positions corresponding to the first electrode solder projections 1510 so as to be in non-contact with each other with a desired clearance provided in the projection openings 1310.

In addition, the second lead terminal 1120 of the electronic component mounted on the surface of the first bus bar 1300 at the peripheral edge of the opening 1310 for the convex body is fixed to the upper surface side of the drawing by reflow soldering. That is, the surface mount type electronic component shown in the present embodiment is reflow soldered on the mounting side. More specifically, in the bus bar laminate shown in FIG. 3, the electronic component is surface-mounted on the upper surface of the first bus bar 1300 on the upper surface side of the drawing, and the lead terminal of the electronic component is soldered and fixed on the upper surface of the first bus bar 1300 by reflow soldering. Each lead terminal is not inserted and fixed to the bus bar as described above, but is bent at the bottom surface of the pedestal, mounted in surface contact, and soldered to the surface layer surface of the bus bar.

Each bus bar 1300,1500 is formed of a metal having a considerable thickness, and has excellent thermal conductivity and can flow a large current with low resistance. The smooth heat dissipation effect of the bus bar laminate can prevent thermal damage to a plurality of electronic components mounted on the bus bar laminate. In particular, by soldering the two lead terminals of the same polarity, i.e., the first lead terminal 1110 (a) and the first lead terminal 1110 (b), to one first electrode solder projection 1510, the concern about the insulation distance between the electrodes is reduced, and the electronic device can be arranged in a relatively dense state, thereby improving the mounting density. That is, when the same polarity terminals of two or more arbitrary electronic devices are soldered to one convex body 1510, all the nearest terminals between the adjacent electronic devices are unified with the same polarity when the entire mounting module is observed, and therefore, concern about measures for maintaining insulation characteristics between electrodes and maintaining insulation distance is reduced. For this reason, in FIG. 3 and the like, the first electrode solder convex body 1510 is illustrated as having an elliptical shape, but the shape is not limited to this, and it is sufficient if the first electrode solder convex body has an area and a space to the extent that a plurality of terminals can be soldered. More specifically, the same corresponding polarity terminals of three electronic devices may be connected to one convex body 1510, the same corresponding polarity terminals of four electronic devices may be connected to one convex body, or the same corresponding polarity terminals of five or six electronic devices may be connected to one convex body by soldering.

As can be understood from FIG. 3, the first busbar 1500 is provided with a convex-body opening 1310 having a larger diameter at a position corresponding to the first electrode solder convex-body 1510 of the second busbar 1300. The second lead terminal 1120 of the surface mount electronic component mounted on the outer surface side of the first bus bar 1300 is electrically and mechanically reflow soldered to the first bus bar 1300 at the peripheral portion of the convex body opening 1310. The insulating sheet 1200 may be formed by applying an insulating material such as various films (for example, polyimide films) having insulating properties or a resist.

In FIG. 3 and the like, in order to more reliably maintain the insulation characteristic of the convex-body opening portion 1310 between the first bus bar 1300 and the second bus bar 1500 even during reflow soldering or the like, the opening area of the insulating sheet 1400 corresponding to the first electrode soldered convex-body 1510 may be made smaller than the opening area of the convex-body opening portion 1310.

Further, only the first electrode solder projections 1510 are exposed from the openings of the insulating sheet 1400 at the corresponding positions, and the other flat portions of the second bus bar 1500 are not exposed. Thus, even if the reflow solder excessively adheres to the peripheral portion of the opening 1310 for the convex body and leaks to the second bus bar 1500 side along the inner peripheral wall thereof, the solder is prevented from contacting the second bus bar 1500 by the insulating sheet 1400, and the insulating property can be secured surely and safely. More preferably, the insulating property is further improved by disposing or applying an insulating material such as a resist agent to the side wall (tapered shape in FIGS. 2a and 2b) forming the first electrode solder convex body 1510 and the side wall (vertical peripheral wall in FIGS. 2a and 2b) of the convex body opening 1310. In addition, since the area of the bus bar laminated body can be reduced in accordance with the miniaturization and the high density of the module, the electric resistance can be reduced as a whole, and accordingly, the total heat generation can also be reduced.

FIGS. 4a to 4d are diagrams for explaining a capacitor 1100 illustratively mounted in the present embodiment configured as a surface mount type. Although FIGS. 4a to 4d illustrate a capacitor configuration as a typical example of an electronic component, the electronic component of the present invention is not limited to a capacitor, and may be any surface mount type electronic device. Of course, the electronic component may be a chip-type electronic component not having lead terminals. As shown in FIGS. 4a to 4d, the capacitor 1100 is fitted to the pedestal 1200 with the lead terminal 1110,1120 inserted therethrough, and thus can be mounted by surface contact with the bottom surface of the pedestal 1200.

The first lead terminal 1110 and the second lead terminal 1120 are inserted through the base 1200 and bent along the bottom surface thereof, so that at least the tip portions thereof project from the peripheral edge portion of the base 1200. Therefore, when the capacitor 1100 and the pedestal 1200 are viewed in plan from above, the tip portions of the first lead terminal 1110 and the second lead terminal 1120 are visible from the edge of the pedestal 1200. As shown in FIG. 2, even if the tip portions of the respective first lead terminals 1110 of the two capacitors 1100 soldered to the same first electrode solder convex body 1510 are electrically contacted, the electrical characteristics are not negatively affected.

A pair of auxiliary terminals 1130 are preferably provided around the first lead terminal 1110 and the second lead terminal 1120 on the bottom surface of the pedestal 1200, and by soldering the auxiliary terminals 1130 together with the first lead terminal 1110 and the second lead terminal 1120 in the reflow soldering process, the fixing strength is increased, and the impact resistance and the vibration resistance are improved.

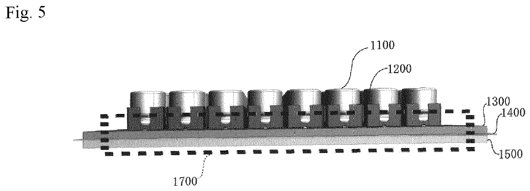

FIG. 5 is a diagram illustrating a typical example of a capacitor mounting module molded with resin 1700 shown by a broken line. FIG. 5 shows a state in which the first bus bar 1300, the second bus bar 1500, and a part of the capacitor 1100 (typically, a substantially lower half including a pedestal) are molded with the resin 1700. Although not shown in FIG. 6, each lead terminal 1110,1120 has already been soldered.

As shown in FIG. 5, when the resin 1700 is molded, the resin 1700 enters the space around the first electrode solder convex body 1510 and the convex body opening 1310 to be filled therein, so that not only the heat dissipation characteristic is improved but also the whole strength is greatly increased, and the vibration resistance, the impact resistance, and the durability are improved. In addition to the soldering, since the capacitors 1100 are molded and integrated with the bus bars 1300,1500, the capacitors 1100 are fixed even with the resin 1700, and the impact resistance is greatly improved.

In particular, as is clear from FIGS. 3 and 5, since the bus bar 1300,1500 is not a flat bus bar of a plate-like flat body but has a concavo-convex shape and an increased surface area, a large contact area with the resin 1700 can be secured, and the heat dissipation characteristic and the adhesive strength can be increased thereby. Even when large vibration, impact, or acceleration is applied, the entire resin 1700 retains the shape, and therefore, the load on the lead terminal 1120,1110 is small as compared with the case where the lead terminal 1120,1110 is fixed only by the lead terminal. Although not shown, the resin 1700 may be provided with an arbitrary passage hole for degassing the condenser 1100. Further, the heat sink may be provided and further molded with the resin 1700.

Although not shown in the drawings, the electronic component mounting module may be of a mode in which a surface mount chip-type ceramic capacitor is mounted. The chip-type ceramic capacitor includes a first electrode and a second electrode, wherein the first electrode is reflow soldered to the flat top portion of the first electrode solder projection 1510 and the second electrode is reflow soldered to the first bus bar 1300. As described above, the first electrode solder convex member 1510 is a flat plate-shaped second bus bar 1500 having a convex portion, and is a part of the second bus bar 1500.

By forming the solder fillet in this manner, all of the solder fillet for the first electrode is more preferably formed in the flat crown portion of the first electrode soldering convex body 1510, and therefore, the quality check and confirmation of the reflow soldering process can be easily and quickly performed by observation and evaluation in a plan view from above. Further, since the whole bottom surfaces of the first electrode and the second electrode are soldered, the mounting strength is increased, the vibration resistance and the impact resistance are improved, and the heat radiation characteristic is also improved, so that the reliability, durability and the life of the ceramic capacitor are improved. The external terminals of the surface mount component to be reflow soldered may be, for example, the lead terminals illustrated in FIG. 2 or electrode terminals illustrated as a surface mount chip-type ceramic capacitor. In this case, the first electrodes of two or more chip-type ceramic capacitors may be reflow soldered to the flat top portion of the first electrode solder projection 1510. The effect of this is the same as that of the above-described embodiment, and it is possible to expect a reduction in electrical resistance and a reduction in heat generation while improving the mounting density and achieving miniaturization. Since the polarities of the electrodes of the nearest terminals are the same between the capacitors arranged adjacent to each other in the mounted chip-type ceramic capacitors, the possibility of the electrical characteristics being damaged is hardly considered even if the insulation distance is not large.

In the electronic component illustrated in the present embodiment, it is not necessary to allow the lead terminal protruding from the electronic component to penetrate through the insertion hole of the bus bar. Therefore, in the case of surface mounting the electronic component, the orientation and relative orientation of the electronic component and the bus bar can be freely designed and changed within a range in which the surface mounting is possible. Therefore, the versatility and the degree of freedom in mounting the electronic component can be improved.

In a typical example of the present invention, the external terminals of the same polarity of the plurality of electronic components connected to one convex body are arranged to face each other (see FIG. 2b, etc.), whereby the electronic components can be mounted more densely as shown in FIGS. 1, 2a, and 2b, and the mounting density is further improved.

The bus bar laminated body, the electronic component mounting module, and the like of the present invention are not limited to the configurations and the methods described in the above-described embodiments, and the configurations, the combinations, and the methods can be appropriately changed within the scope obvious to a person skilled in the art and within the scope of the technical idea of the present invention.

### [Industrial applicability]

The present invention is suitable for a mounting module for a plurality of electronic components, typically capacitors.

### DESCRIPTION OF REFERENCE NUMERALS

1000 an electronic component mounting module
1100 a capacitor;
1110 first lead terminal
1120 second lead terminal
1130 auxiliary terminal
1200 pedestal;
1300 a first bus bar;
1310 an opening for a convex body;
1400 an insulating sheet;
1500 a second bus bar;
1510 First electrode solder convex body
1700 Mold resin

## Claims

1. An electronic component mounting module includes a bus bar laminate in which a first bus bar and a second bus bar, each of which includes a region for soldering an external terminal of an electronic component, are laminated in an insulated manner,
wherein the first bus bar includes an opening, and
the second bus bar has a convex body projecting toward the first bus bar and including a region to be soldered
the convex body of the second bus bar is arranged at a position corresponding to the opening,
the region to be soldered of the first bus bar and a region to be soldered of the convex body are at the same height to such an extent that an external terminal of the electronic component can be soldered by reflow soldering, and
the plurality of the electronic components to which the external terminal is soldered are provided on the first bus bar side, and the plurality of the electronic components are connected to the external terminal of the same polarity with respect to one convex body.

2. The electronic component mounting module according to claim 1,
wherein, in the relationship between the electronic component mounted on the electronic component mounting module and other electronic components disposed adjacent to the periphery of the electronic component, polarities of the external terminals that are in close proximity to each other are the same.

3. The electronic component mounting module according to claim 1 and claim2, wherein the external terminals of the plurality of electronic components connected to the one convex body are arranged to face each other.

4. A method of manufacturing an electronic component mounting module, the method includes a bus bar laminate in which a first bus bar and a second bus bar, each of which has a region to which an external terminal of an electronic component is soldered, are laminated in an insulated manner
the first busbar is formed with an opening, and the second busbar is formed with a convex body projecting toward the first busbar and including a region to be soldered, arranging the convex portion of the second bus bar at a position corresponding to the opening portion, and laminating the first bus bar and the second bus bar in an insulating manner;
soldering the external terminals of the plurality of electronic components on the first busbar side;
wherein a region to be soldered of the first bus bar and a region to be soldered of the convex body are at the same height to such an extent that an external terminal of the electronic component can be soldered by reflow soldering, and the external terminals of the plurality of electronic components having the same polarity are connected to one convex body.

5. The method of manufacturing an electronic component mounting module according to claim 4,
wherein in the relationship between the electronic component mounted on the electronic component mounting module and all other electronic components disposed adjacent to the periphery of the electronic component, polarities of the external terminals that are in close proximity to each other are the same.

6. The method of manufacturing an electronic component mounting module according to claim 4 or 5,
wherein the external terminals of the same polarity of the plurality of electronic components connected to the one convex body are arranged to face each other.
